Europäisches Patentamt

European Patent Office

Office européen des brevets

(11) EP 0 648 656 B1

(19)

(12) **EUROPÄISCHE PATENTSCHRIFT**

(45) Veröffentlichungstag und Bekanntmachung des Hinweises auf die Patenterteilung:
02.05.1997 Patentblatt 1997/18

(51) Int. Cl.$^6$: **B60T 7/12**

(21) Anmeldenummer: 94115822.2

(22) Anmeldetag: 07.10.1994

(54) **Verfahren zur Überwachung des Bremsvorganges bei automatisch geführten Fahrzeugen**

Method for the supervision of the braking-procedure by automatically guided vehicles

Procédé pour la surveillance du cours de freinage sur véhicules avec conduite automatique

(84) Benannte Vertragsstaaten:
AT BE CH DE ES FR GB IT LI SE

(30) Priorität: 16.10.1993 DE 4335344

(43) Veröffentlichungstag der Anmeldung:
19.04.1995 Patentblatt 1995/16

(73) Patentinhaber: **Alcatel SEL Aktiengesellschaft**
**D-70435 Stuttgart (DE)**

(72) Erfinder:
• **Renninger, Gerd**
**D-71254 Ditzingen (DE)**

• **Schwarzwälder, Jörg**
**D-71254 Ditzingen (DE)**

(74) Vertreter: **Pechhold, Eberhard, Dipl.-Phys. et al**
**Alcatel Alsthom**
**Intellectual Property Department,**
**Postfach 30 09 29**
**70449 Stuttgart (DE)**

(56) Entgegenhaltungen:
| EP-A- 0 038 956 | DE-A- 4 218 484 |
| DE-A- 4 310 354 | US-A- 4 073 359 |
| US-A- 4 079 802 | US-A- 4 621 705 |
| US-A- 5 053 979 | US-A- 5 165 497 |

**Beschreibung**

Die Erfindung betrifft ein Verfahren gemäß dem Oberbegriff des Patentanspruchs 1.

Derartige Verfahren werden z.B. bei der Steuerung spurgebundener Fahrzeuge angewandt. So bremsen z.B. über einen Linienleiter gesteuerte Züge auf den Schnellfahrstrecken der Deutschen Bundesbahn nach vorgegebenen, parabelförmigen Bremskurven ab, welche von Bordsteuergeräten der Triebfahrzeuge aus Vorgaben, die von einer Steuerzentrale her auf das jeweilige Triebfahrzeug übertragen werden, und aus im Fahrzeug gespeicherten, fahrzeugspezifischen Daten errechnet werden.

In einem Aufsatz von F. Kollmannsberger in der Zeitschrift "Eisenbahningenieur" 34 (1983), Heft 10, Seiten 527 ff, wie z.B. in der Europäische Patentanmeldung EP-A-0 038 956 der Firma Knorr-Bremse, sind verschiedene, nach solchen Verfahren arbeitende Zugbeeinflussungssysteme beschrieben.

Der bei den bekannten Zugbeeinflussungssystemen durchgeführte Soll/Ist-Geschwindigkeitsvergleich setzt neben einer fortlaufenden meßtechnischen Erfassung der Ist-Geschwindigkeit eine fortlaufend neu durchzuführende Berechnung der Soll-Geschwindigkeit aus der verwendeten Bremskurve und dem vom Fahrzeug zurückgelegten Weg voraus. Diese in Echtzeit auszuführende Berechnung der Soll-Geschwindigkeit schließt eine Quadratwurzelberechnung ein, die sich üblicherweise einer Standard-Bibliotheksfunktion ("SQRT") bedient und wegen eines hierbei auszuführenden Iterationsverfahrens viel Zeit in Anspruch nimmt. Außerdem laufen Gleitkomma-Verfahren wie die SQRT-Funktion einem wichtigen Grundsatz bei der Entwicklung von Fahrzeugsteuerungsverfahren zuwider, der bei einem möglichst geringen Softwareumfang einen übersichtlichen Programmablauf fordert.

Der Erfindung liegt deshalb die Aufgabe zugrunde, ein Verfahren zur Geschwindigkeitsüberwachung der vorstehend beschriebenen Art anzugeben, bei dem eine möglichst schnelle, in Echtzeit ausführbare Soll-Geschwindigkeitsermittlung erfolgt.

Diese Aufgabe wird durch die im kennzeichnenden Teil des Patentanspruchs 1 angegebenen Merkmale gelöst.

Durch die hier vorgesehene Ganzzahlberechnung der Soll-Geschwindigkeit aus Werten, die durch den jeweils zurückgelegten Weg und die vom Fahrzeug verwendete Bremskurve gegeben sind und das Quadrat der Geschwindigkeit wiedergeben, verringert sich der Zeitbedarf für die Soll-Geschwindigkeitsberechnung so weit, daß Soll-Geschwindigkeitswerte in der für eine sichere Bremswegüberwachung erforderlichen Dichte, auch bei Verwendung von 32-bit-Zahlen als Radikanden, gewonnen werden können. Zudem werden Gleitkomma-Operationen vermieden. Der Verlust an Genauigkeit - die Abweichung beträgt maximal (-1) - ist tolerierbar. In Fällen, in denen ein genaueres Ergebnis benötigt wird, kann ein einstufiges Korrekturverfahren nachgeschaltet werden.

Nachdem sich alle Bremskurven auf die Quadratwurzelfunktion $V = \sqrt{2as}$ - hierbei ist a die vorgegebene Bremsbeschleunigung, s der vom Fahrzeug zurückgelegte Weg - zurückführen lassen, ist es vorteilhaft, der Ganzzahlberechnung einen Sekantenzug zugrunde zu legen, der der Quadratwurzelfunktion möglichst gut angepaßt ist und dessen Eckpunkte deshalb mit zunehmender Krümmung der Quadratwurzelfunktion geringere Abstände voneinander haben.

Ausgestaltungen des Verfahrens nach der Erfindung sind den Unteransprüchen zu entnehmen.

Gemäß Patentanspruch 2 werden die Koordinaten der Eckpunkte für den Sekantenzug so berechnet, daß der Sekantenzug an keiner Stelle um mehr als z.B. 0,5 von der anzunähernden Wurzelfunktion $V = \sqrt{2as}$ abweicht. Damit ist sichergestellt, daß ein Vernachlässigen von Dezimalanteilen ermittelter Ergebnisse zu keiner nicht mehr tolerierbaren Abweichung der Soll-Geschwindigkeit nach oben führt.

Patentanspruch 3 betrifft die Vorabspeicherung des Sekantenzuges im Bordsteuergerät. Durch eine derartige Vorabspeicherung erübrigt es sich, einen Sekantenzug immer wieder neu berechnen und dafür Rechenzeit aufbringen zu müssen.

Patentanspruch 4 gibt eine Regel an, nach der Koordinaten von nicht äquidistanten Eckpunkten eines Sekantenzuges berechnet werden können. Das Vorsehen nicht äquidistanter Eckpunkte für den Sekantenzug ermöglicht die Abdeckung eines großen Zahlenbereichs mit nur wenigen Stützwerten.

Das Verfahren nach der Erfindung wird im Folgenden anhand eines Ausführungsbeispiels ausführlich beschrieben.

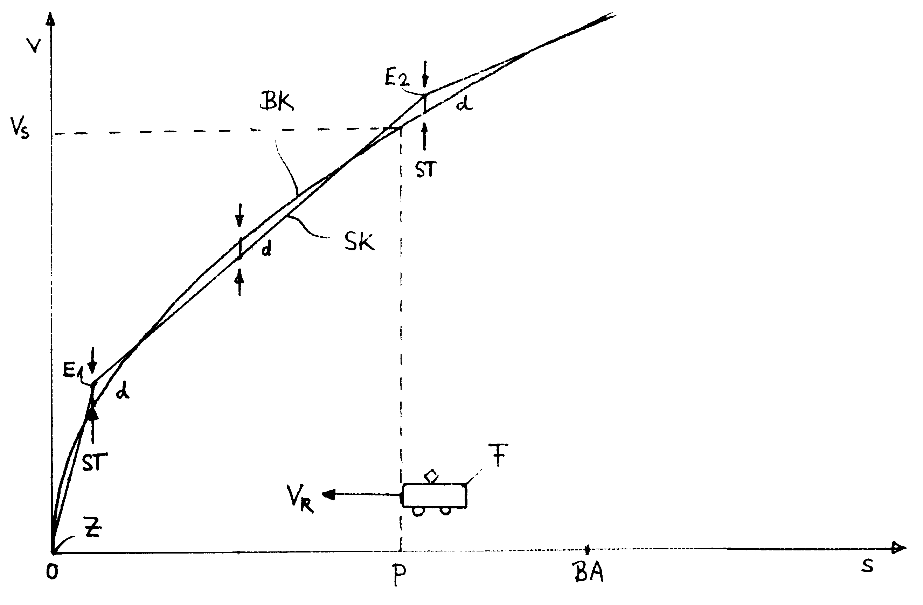

In Fig. 1 ist schematisch der Verlauf einer Bremskurve im Weg/Geschwindigkeitsdiagramm wiedergegeben. Entlang der Ordinate ist die Geschwindigkeit V, entlang der Abszisse der Weg S abgetragen. Ein Fahrzeug F bewegt sich mit einer Ist-Geschwindigkeit $V_R$ im Diagramm von rechts nach links. Das Fahrzeug soll abgebremst, an einem Zielpunkt Z, der sich in der Figur im Ursprung des Koordinatensystems befindet, zum Stillstand gebracht werden. Im Bordsteuergerät des Fahrzeuges ist zu diesem Zweck eine Soll-Bremskurve gespeichert, die von den Bremseigenschaften des Fahrzeuges abhängt und der eine vorgegebene konstante Bremsverzögerung zugrundeliegt. Diese Bremskurve ist im Diagramm als Parabel BK wiedergegeben. Sobald das Fahrzeug einen Bremsbefehl erhält, vergleicht es seine Ist-Geschwindigkeit mit der Soll-Geschwindigkeit, die sich aus der gespeicherten Bremskurve für den jeweils gültigen Fahrort ergibt.

Befindet sich das Fahrzeug zum Zeitpunkt, zu dem es den Bremsbefehl erhält im Punkt BA, und ist seine Geschwindigkeit niedriger als die Soll-Geschwindigkeit, so fährt es zunächst mit gleichbleibender Ist-Geschwindigkeit $V_R$ weiter, so lange, bis die entlang der Bremskurve abnehmende Soll-Geschwindigkeit $V_S$ die Ist-Geschwindigkeit unterschreitet.

Dies sei in dem in der Figur wiedergegebenen Weg-Geschwindigkeits-Diagramm am Punkt P der Fall. Am Punkt P erfolgt deshalb der Bremseinsatz. Das Fahrzeug wird danach mit konstanter Bremsverzögerung abgebremst bis es im Punkt Z zum Stillstand gekommen ist. Während des Bremsvorganges muß die Einhaltung der Bremskurve innerhalb vorgegebenen enger Grenzen überwacht werden, um ein Abweichen von dem vorgegebenen Verlauf und ein damit verbundenes Überfahren des Zielpunktes - z.B. durch Einsatz der stärker verzögernden, jedoch für Fahrzeug und Gleisanlage schädlichen Zwangsbremse - verhindern zu können. Diese Überwachung muß signaltechnisch sicher erfolgen. Dazu ist es nötig, Soll-Ist-Geschwindigkeitsvergleiche in dichter Folge durchzuführen. Die hierfür benötigten Soll-Geschwindigkeitswerte $V_S$ müssen für den jeweiligen, von einer Wegmeßeinrichtung des Fahrzeuges ermittelten Fahrort aus der vorgegebenen Bremskurve berechnet werden. Dies geschieht im Normalfall durch eine Quadratwurzelberechnung, da die Soll-Geschwindigkeit die Quadratwurzel aus dem bis zum Zielpunkt, dem Scheitelpunkt der parabelförmigen Bremskurve, vom Fahrzeug zurückzulegenden Weg ist.

Um die eingangs bereits beschriebenen, mit der Echtzeitberechnung von Quadratwurzeln verbundenen Probleme zu vermeiden, ist die die Soll-Bremskurve BK wiedergebende Funktion hier durch einen Sekantenzug SK angenähert worden. Eckpunkte des Sekantenzuges befinden sich an Stützstellen ST, die mit zunehmenden Weg- und Geschwindigkeitswerten größere Abstände voneinander aufweisen. Diese nicht äquidistante Anordnung der Eckpunkte ergibt sich aus der Forderung, daß der Sekantenzug an keiner Stelle mehr als einen vorgegebenen Abstand d von der Funktion BK entfernt sein darf. Der Abstand d wird so gewählt, daß die durch die Zugrundelegung des Sekantenzuges hervorgerufene Ungenauigkeit der Soll-Geschwindigkeitswerte tolerierbar ist.

In dem beschriebenen Ausführungbeispiel können anstelle der Funktion BK die Koordinaten der Eckpunkte $E_1$, $E_2$ des Sekantenzuges SK im Bordsteuergerät abgespeichert sein. Zur Berechnung der Soll-Geschwindigkeit sucht der Rechner des Bordsteuergerätes zunächst die beiden Eckpunkte auf, zwischen denen der Wegpunkt, an dem die Soll-Geschwindigkeit ermittelt werden soll, liegt. Der Soll-Geschwindigkeitswert wird dann durch lineare Interpolation zwischen den Eckpunkten gewonnen. Soll als Soll-Geschwindigkeit anstelle des bei der Interpolation im allgemeinen gefundenen, nicht ganzzahligen Wertes der nächstniedrigere ganzzahlige Wert verwendet werden, so wird der nicht ganzzahlige Teil des gefundenen Wertes einfach weggelassen. Wird mit Integer-Zahlen gearbeitet, ist das Ergebnis immer ganzahlig. Der gefundene Wert liegt immer unterhalb der Sekanten, was eine niedrigere Soll-Geschwindigkeit und somit eine Abweichung zur sicheren Seite hin bedeutet.

Da sich alle Bremskurven durch Multiplikation mit einem Faktor auf die Quadratwurzelfunktion V = $\sqrt{2as}$

zurückführen lassen, genügt es, Eckwerte für einen an diese Funktion angepaßten Sekantenzug abzuspeichern und diese für alle Bremskurven zu benutzen.

Wird dann der maximale Abstand d der Sekanten von der Quadratwurzelfunktion z.B. 0,5 gewählt, so liegen die gefundenen ganzzahligen Soll-Geschwindigkeitswerte um maximal 0,5 über dem Wert der Wurzelfunktion und um maximal 1,5 unter dem Wert der Wurzelfunktion. Es besteht die Möglichkeit, etwa im Bereich um die Mitte zwischen zwei Eckpunkten der Sekantenkurve, in dem ein um den Wert 1 höherer Soll-Geschwindigkeitswert eine bessere Annäherung an die Wurzelkurve darstellt, eine gezielte Prüfung nachzuschalten, ob ein um 1 erhöhter Soll-Geschwindigkeitswert näher an der Wurzelfunktion liegt als der zunächst ermittelte Wert. Dies kann durch Quadrieren der beiden Werte und Vergleich der Quadrate mit der Wegpunktkoordinate erfolgen.

Werden Koordinaten von Eckpunkten eines Sekantenzuges nach der Rekursionsformel

$$x_i = 4i^2 (i + 1)^2$$

$$y_i = 2i (i + 1)$$

berechnet, wobei i Werte von 0 bis 19 annimmt, so läßt sich zur Wurzelfunktion V = $\sqrt{2as}$ ein Sekantenzug mit 20 Eckpunkten errechnen, der die Bedingung, an keiner Stelle um mehr als 0,5 von der Wurzelfunktion abzuweichen, erfüllt.

**Patentansprüche**

1.  Verfahren zur Überwachung der Geschwindigkeit eines automatisch gesteuerten, mit einer Wegmeßeinrichtung und einem Bordsteuergerät ausgerüsteten Fahrzeuges während Bremsungen, die mit vorgegebener, konstanter Verzögerung nach parabelförmigen Bremskurven ausgeführt werden, bei dem die Ist-Geschwindigkeit des Fahrzeuges mit einer Soll-Geschwindigkeit, die durch die jeweils einzuhaltende Bremskurve und den vom Fahrzeug zurückgelegten Weg bestimmt ist und vom Bordsteuergerät berechnet wird, fortlaufend verglichen wird, und bei dem eine Sicherheitsreaktion erfolgt, wenn der Vergleich zwischen Ist-Geschwindigkeit und Soll-Geschwindigkeit eine Differenz ergibt, die einen vorgegebenen, maximal zulässigen Wert übersteigt,
    **dadurch gekennzeichnet,** daß zur Ermittlung der Soll-Geschwindigkeit (VS) eine Ganzzahl-Näherungsrechnung unter Zugrundelegung eines der Quadratwurzelfunktion angenäherten Sekantenzuges (SK) mit nicht äquidistanten Eckpunkten (E1, E2) erfolgt.

2.  Verfahren nach Anspruch 1, dadurch gekennzeichnet, daß die Koordinaten der Eckpunkte unter der Vorgabe errechnet werden, daß der Sekantenzug an keiner Stelle um mehr als einen vorgegebenen Betrag (d) von der Wurzelfunktion abweicht.

3. Verfahren nach Anspruch 1 oder 2, dadurch gekennzeichnet, daß die Koordinaten der Eckpunkte des Sekantenzuges im Bordsteuergerät abgespeichert sind.

4. Verfahren nach einem der vorstehenden Ansprüche, dadurch gekennzeichnet, daß die Koordinaten der Eckpunkte dess Sekantenzuges nach der Rekursionsformel

$$x_i = 4i^2(i+1)^2$$

$$y_i = 2i(i+1)$$

berechnet werden, wobei für i Werte von 0 bis 19 eingesetzt werden.

## Claims

1. A method of supervising the speed of an automatically controlled vehicle, equipped with a distance meter and an on-board controller, during braking processes which are carried out with a predetermined, constant retardation in accordance with parabolic braking curves, wherein the actual speed of the vehicle is continuously compared with a nominal speed which is determined by the respective braking curve to be followed and the distance travelled by the vehicle and which is calculated by the on-board controller, and wherein a safety reaction is intiated if the comparison between actual speed and nominal speed gives a difference which exceeds a predetermined, maximum permissible value,
   **characterized in** that to determine the nominal speed (VS), an integer approximation calculation is performed based on continuous secants (SK) which approximate the square-root function and have non-equidistant vertices (E1, E2).

2. A method as claimed in claim 1, characterized in that the coordinates of the vertices are calculated on the basis that the continuous secants do not deviate from the root function at any point by more than a predetermined amount (d).

3. A method as claimed in claim 1 or 2, characterized in that the coordinates of the vertices of the continuous secants are stored in the on-board controller.

4. A method as claimed in any one of the preceding claims, characterized in that the coordinates of the vertices of the continuous secants are calculated by the recurrence formula

$$x_i = 4i^2(i+1)^2$$

$$y_i = 2i(i+1)$$

where values from 0 to 19 are put in for i.

## Revendications

1. Procédé pour contrôler la vitesse d'un véhicule commandé de façon automatique et équipé d'un dispositif de mesure de distance et d'un appareil de commande de bord, pendant des freinages qui sont exécutés avec une décélération constante prédéterminée conformément à des courbes de freinage de forme parabolique, selon lequel la vitesse réelle du véhicule est comparée en permanence à une vitesse de consigne, qui est déterminée par la courbe de freinage devant être respectivement respectée et par la distance parcourue par le véhicule et calculée par l'appareil de commande de bord, et selon lequel une réaction de sécurité est exécutée lorsque la comparaison entre la vitesse réelle et la vitesse de consigne fournit une différence qui dépasse une valeur maximale admissible prédéterminée,
   caractérisé en ce qu'un calcul d'approximation en nombres entiers est exécuté, pour déterminer la vitesse de consigne (VS), sur la base d'une suite (SK) de sécantes, qui se rapproche de la fonction racine carrée et présentant des points anguleux (E1, E2) non équidistants.

2. Procédé selon la revendication 1, caractérisé en ce que les coordonnées des points anguleux sont calculées moyennant l'hypothèse qu'en aucun point, la suite de sécantes ne s'écarte de plus d'une valeur prédéterminée (d) de la fonction racine carrée.

3. Procédé selon la revendication 1 ou 2, caractérisé en ce que les coordonnées des points anguleux de la suite de sécantes sont mémorisés dans l'appareil de commande de bord.

4. Procédé selon l'une des revendications précédentes, caractérisé en ce que les coordonnées des points anguleux de la suite de sécantes sont calculés selon la formule de récursion

$$x_i = 4i^2(i+1)^2$$

$$y_i = 2i(i+1)$$

en utilisant pour i des valeurs de 0 à 19.

EP 0 648 656 B1